# FASCICULE DE BREVET EUROPEEN

(11) **EP 0 391 761 B1**
(45) Date de publication et mention de la délivrance du brevet: **03.02.1993**
(21) Numéro de dépôt: 90400768.9
(22) Date de dépôt: 20.03.1990
(51) Int. Cl.: F16L 59/16

(54) **Collerette pour tuyaux double-parois et son procédé d'obtention**
Bund für doppelwandige Rohre und Herstellungsverfahren
Collar for double-walled pipes and process of manufacturing the same

(30) Priorité: 24.03.1989 FR 8903933
(43) Date de publication de la demande: 10.10.1990
(73) Titulaire: ETABLISSEMENTS POUJOULAT S.A. Société anonyme dite:, F-79270 Frontenay Rohan-Rohan (FR)
(72) Inventeur: Coirier, Yves, F-92380 Garches (FR); Murzeau, Jack, F-79000 Niort (FR)
(74) Mandataire: Bérogin, Francis

(56) Documents cités:
- DE-U- 7 442 232
- DK-C- 128 954
- US-A- 2 650 112

## Description

La présente invention concerne une collerette pour tuyaux double-parois et son procédé d'obtention.

On connait dans la technique diverses réalisations de tuyaux double-parois. Habituellement, les gaz chauds passent dans un conduit interne lequel conduit est entouré par un autre conduit ou tuyau de diamètre supérieur et entre les deux conduits ou tuyaux est disposé un matériau isolant comme de la laine de roche, de la laine de céramique et analogue. Pour adapter les deux conduits ou tuyaux entre lesquels se trouve une épaisseur sensible d'isolant, on a recours habituellement à des collerettes d'adaptation de tuyaux. Ces collerettes qui sont bien connues servent à fermer les tuyaux ou tubes pour maintenir ledit isolant et elles permettent de conserver l'épaisseur d'isolant choisi le plus constant possible.

Bien entendu, deux collerettes au moins sont nécessaires pour fermer convenablement l'ensemble de tuyaux concentriques.

Selon l'Art antérieur, les collerettes sont obtenues par emboutissage. Elles présentent une partie formant fût et une partie radiale dirigée vers l'intérieur. La partie radiale est nécessairement pleine du fait de l'obtention par emboutissage.

DE-U-7442232 décrit et illustre une collerette pour tuyaux double-parois dont la partie radiale dirigée vers l'intérieur comporte des entailles, ce qui conduit à des parties se superposant. Il n'y a pas d'enlèvement de matière et de parties ajourées.

US-A-2650112 décrit et illustre une collerette formant bride percée d'une pluralité de fentes.

DK-C-128954 illustre une collerette avec des moyens d'accrochage à la périphérie.

L'inconvénient de l'emboutissage pour obtenir des collerettes appropriées réside dans la difficulté qui existe pour avoir des diamètres différents.

Il est nécessaire en effet de pouvoir disposer de collerettes de diamètres différents et un outil d'emboutissage ne permet d'avoir qu'un seul diamètre constant.

Par diamètre, il convient d'entendre le diamètre au niveau de la partie radiale.

Il n'est pas aisé voire possible de pouvoir disposer d'outils d'emboutissage et de presse d'emboutissage répondant à toutes les gammes de diamètre souhaitées.

Il existe donc actuellement un besoin de pouvoir disposer, de façon simple, de collerettes satisfaisant à tous les diamètres requis.

La présente invention résoud le problème précité en permettant d'obtenir toutes collerettes selon n'importe quel diamètre désiré d'une façon sûre et moins coûteuse qu'autrefois.

De plus, il est à noter que l'emboutissage implique une perte de matière même si dans certains cas celle-ci est réduite.

Selon la présente invention, il n'y a pas de perte de matière et la collerette obtenue présente de meilleures propriétés pour l'isolation thermique que les collerettes selon l'Art antérieur.

La présente invention a donc pour objet une collerette pour tuyaux double-parois comportant une partie formant fût prolongée par une partie radiale ajourée dirigée vers l'intérieur qui est caractérisée en ce que la partie radiale est constituée de lamelles séparées par des ajours.

La présente invention a également pour objet un procédé d'obtention d'une collerette pour tuyaux double-parois dans lequel on prévoit une bande métallique sans fin ou tôle d'une dimension déterminée consistant à :
(a) pratiquer des encoches pas à pas avec un outil approprié et selon une avance ou défilement adapté, pour obtenir des lamelles séparées par des ajours
(b) plier la tôle près de l'endroit où sont prévues les encoches,
(c) rouler ledit ensemble pour obtenir le diamètre désiré,
(d) souder latéralement la structure formée,
(e) conformer avec des molettes le fût obtenu pour obtenir des saillants destinés à l'adaptation ultérieure avec les tuyaux.

La présente invention concerne également les caractéristiques ci-après considérées isolément ou selon toutes leurs combinaisons techniquement possibles :
- les parties ajourées sont régulièrement ou irrégulièrement ajourées ;
- la partie formant fût présente au moins un saillant vers l'extérieur pour son adaptation à au moins un tuyau ;
- la partie radiale est constituée de lamelles séparées par des ajours ;
- les lamelles ont une forme rectangulaire ;
- les lamelles ont une forme carrée ;
- les lamelles ont une forme trapézoïdale ;
- les lamelles ont une forme triangulaire ;
- dans l'étape de mise en oeuvre (b) la tôle est pliée sensiblement à l'équerre.

Divers avantages et caractéristiques de la présente invention ressortiront de la description détaillée ci-après faite en regard des dessins annexés sur lesquels :
Figure 1 est un schéma représentant les diverses étapes du procédé de l'invention ;
Figure 2 illustre un tuyau double-parois pourvu d'une collerette tant à la partie supérieure qu'à la partie inférieure ;
Figure 3 est une vue analogue à celle de la Figure 2 mais avec un isolant ;
Figure 4 illustre un raccord coudé avec des collerettes de l'invention ;
Figure 5 est une vue latérale d'un ensemble de tuyaux avec une collerette supérieure et inférieure de l'invention.

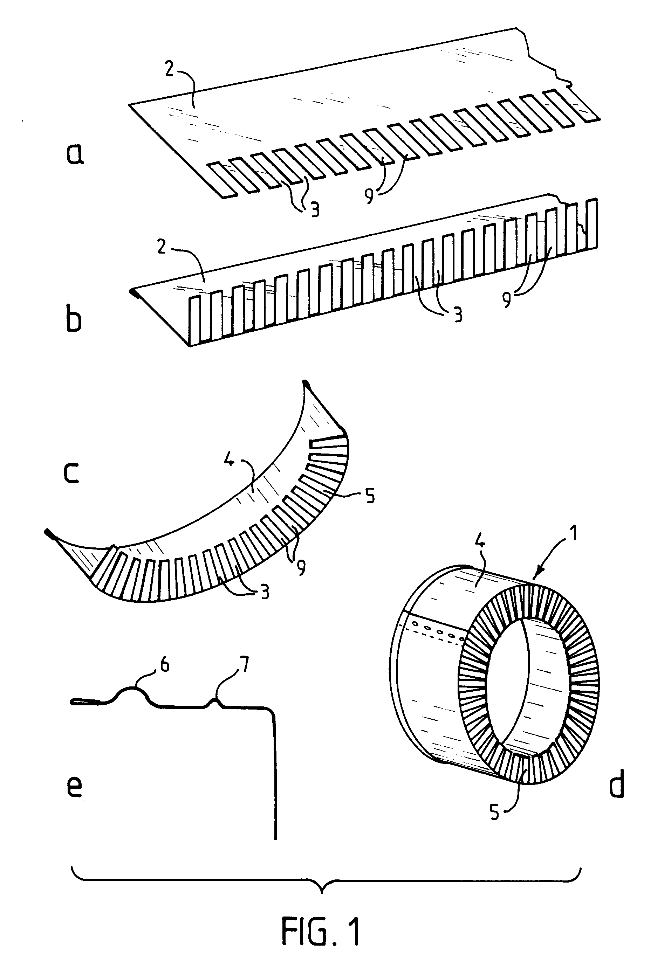

Aux dessins annexés où les mêmes symboles de référence désignent des parties analogues, la collerette de l'invention est désignée dans son ensemble par 1. Cette collerette 1 est susceptible d'être obtenue selon n'importe quel diamètre désiré. Comme représenté sur la Figure 1, on pratique des encoches 3 sur une bande métallique sans fin ou tôle 2 ayant une dimension déterminée. Les encoches 3 sont réalisées, à titre d'exemple, avec des poinçons. Les poinçons peuvent être de tous types convenables. Ainsi, ils peuvent imprimer tous motifs désirés. A titre d'exemples non limitatifs, les motifs en question pourraient être des motifs comme des fleurs, des tréfles, etc... il n'existe en fait aucune limitation. La cadence et le rythme d'application des poinçons sont adaptés aux encoches 3 requises. Lorsque le nombre suffisant d'encoches 3 a été réalisé dans la tôle 2, on plie la tôle 2 près de l'endroit où sont prévues lesdites encoches 3. Le pliage est effectué sensiblement à 90° mais il n'existe pas en fait de limitations. On procède alors à une étape de roulage qui est réalisable en raison de la prévision préalable des encoches 3. Cette étape de roulage permet d'avoir tous diamètres souhaités. Après le roulage, il convient de souder le fût 4 de la collerette 1 formée. Le soudage peut être réalisé, à titre d'exemple non limitatif, selon un sondage par points mais en fait il n'existe également aucune limitation au mode de soudage à mettre en oeuvre.

Lorsque les étapes précédentes ont été effectuées, il est alors possible de conformer le fût 4 avec des molettes pour obtenir des saillants 6, 7 destinés à l'adaptation avec les tuyaux ou tubes à double-parois.

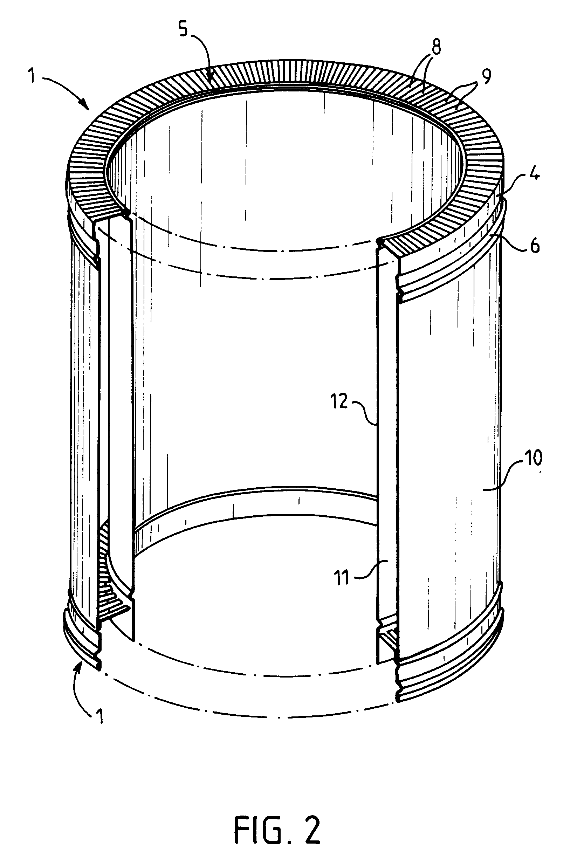

La Figure 2 représente un tuyau à deux parois 10, 12 sans isolant dans l'espace 11 dans lequel on a inséré deux colleretttes 1 selon la présente invention. La collerette 1 comporte une partie formant fût 4 prolongée par une partie radiale 5 dirigée vers l'intérieur. Alors que dans la technique antérieure, les parties radiales 5 sont pleines, dans la présente invention, la partie radiale 5 est ajourée. Il importe de remarquer que les divers ajours sont réalisés à volonté selon le type de poinçon utilisé. Dans l'exemple illustré, la partie radiale 5 est constituée par des lamelles 9 séparées par des ajours. Les lamelles 9 sont, dans l'exemple représenté, de forme rectangulaire. Bien entendu, elles peuvent avoir des formes géométriques complexes comme on l'a déjà indiqué plus haut.

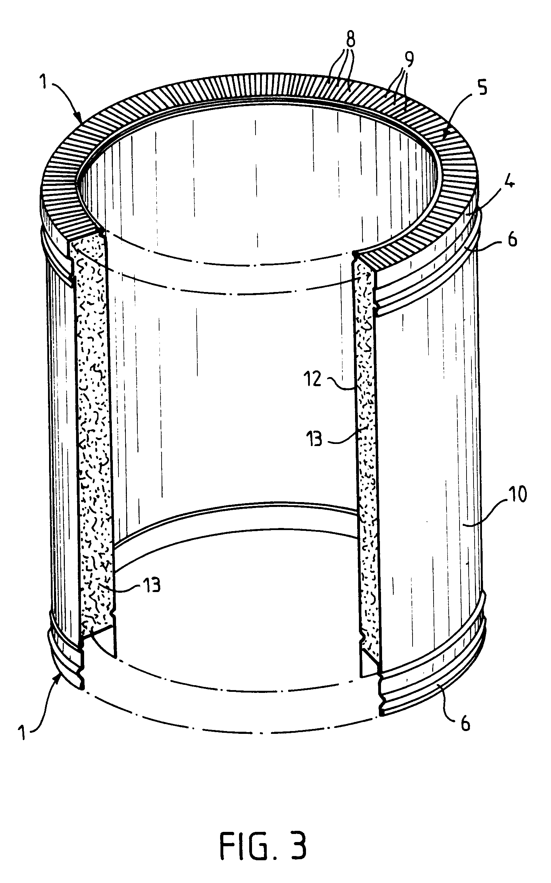

La Figure 3 est analogue à celle de la Figure 2 si ce n'est qu'elle illustre les tuyaux remplis d'isolant 13 entre chaque collerette supérieure et inférieure 1. L'élément isolant 13 peut être constitué de laine de roche, de laine de céramique ou de tout isolant 13 qui soit convenable.

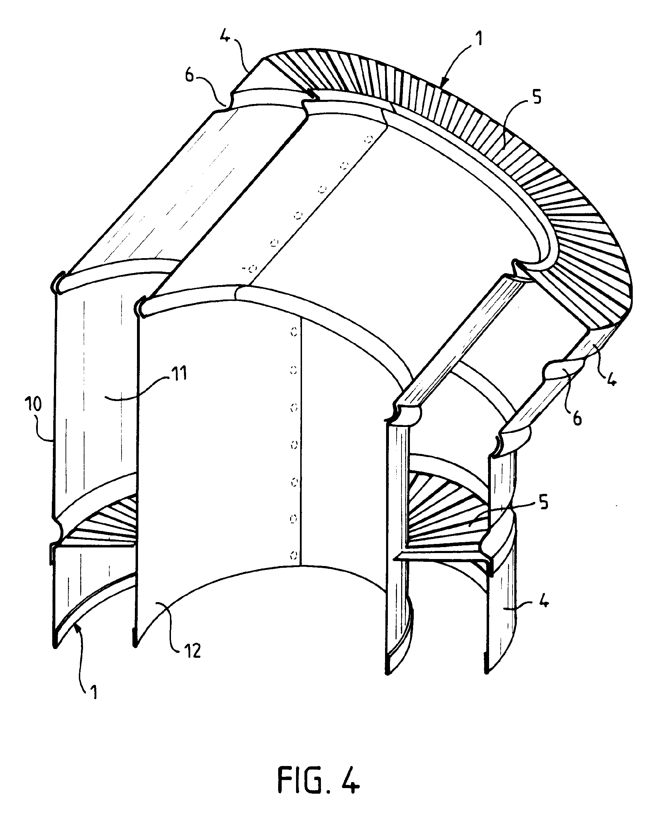

La Figure 4 montre un mode de réalisation particulier de la présente invention dans le cas de la prévision d'un coude. Cette figure illustre particulièrement bien comment s'adaptent les collerettes 1 avec les divers tuyaux 10, 11. Bien entendu, l'angle des coudes peut varier à volonté.

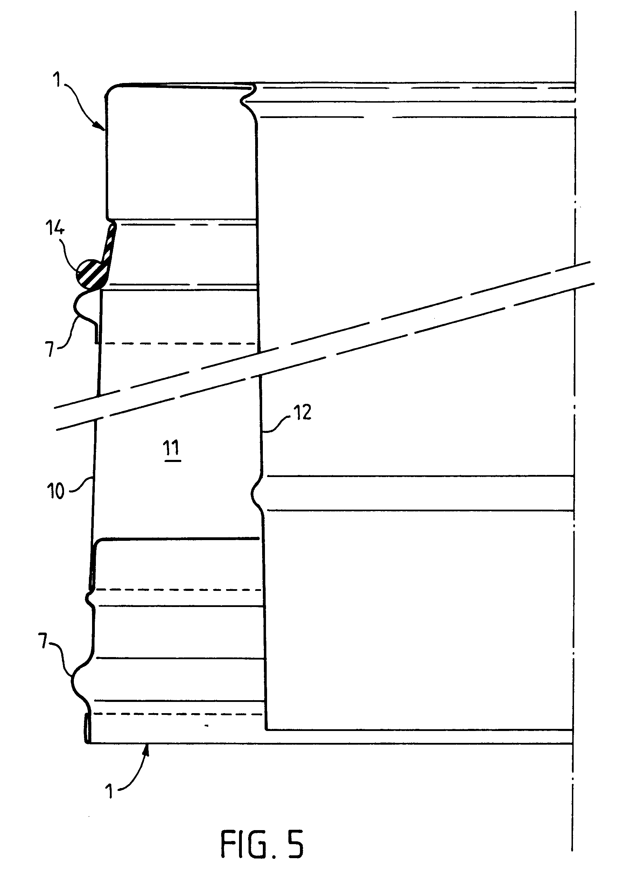

La Figure 5 est une vue latérale d'un ensemble de tuyaux 10, 12 avec une collerette supérieure et inférieure 1. Dans cette forme de réalisation de la présente invention, il est prévu un joint 14 appliqué à l'extérieur sur un saillant 7. Ce joint 14 en matière siliconée n'est pas un élément essentiel de la structure de la collerette 1 de la présente invention.

Il est prévu lorsque certaines adaptations particulières avec certains types de tuyaux concentriques sont prévues.

Il importe de noter que les lamelles 9 ne conduisent pas avec autant d'intensité la chaleur de l'intérieur vers l'extérieur comme cela est le cas avec une partie radiale 5 dirigée vers l'intérieur qui est pleine et non pas pourvue d'une pluralité de lamelles séparées par des interstices ou espaces.

Le fait de ne pas conduire la chaleur de l'intérieur vers l'extérieur avec autant d'intensité que dans le cas de la technique antérieure constitue bien entendu un avantage extrêmement important. L'homme de l'art sait en effet que les gaz chauds traversant les conduits internes sont à une température qui n'est pas négligeable.

Cependant, l'avantage essentiel de la collerette selon la présente invention est qu'il est possible d'avoir tous les diamètres souhaités sans l'utilisation d'outils complexes. Grâce à cela, il est donc possible de répondre rapidement à n'importe quelle demande ce qui n'est pas le cas avec des collerettes impliquant un emboutissage.

Comme on vient de l'indiquer, les diamètres des collerettes selon la présente invention peuvent varier à volonté. On indique ci-après des exemples de dimensions courantes pour les diamètres de la partie radiale 5. Ces dimensions sont 125 mm, 155 mm, 180 mm, 200 mm, 250 mm, 300 mm, 400 mm. Il est même loisible d'avoir des diamètres allant jusqu'à 600 mm. L'homme de l'art comprend aisément la difficulté d'obtenir des collerettes d'un diamètre interne de 660 mm par emboutissage.

La présente invention est donc remarquable par sa simplicité et la facilité selon laquelle il est possible d'avoir tous diamètres nécessaires.

## Revendications

1. Collerette (1) pour tuyaux double-parois comportant une partie formant fût (4) prolongée par une partie radiale (5) ajourée dirigée vers l'intérieur, caractérisée en ce que la partie radiale (5) est constituée de lamelles (9) séparées par des ajours.

2. Collerette selon la revendication 1, caractérisée en ce que les parties ajourées (8) sont régulièrement ou irrégulièrement ajourées.

3. Collerette selon l'une des revendications 1 ou 2, caractérisée en ce que la partie formant fût (4) présente au moins un saillant (6, 7) vers l'extérieur pour son adaptation à au moins un tuyau (10).

4. Collerette selon l'une quelconque des revendications 1 à 3, caractérisée en ce que les lamelles (9) ont une forme rectangulaire.

5. Collerette selon l'une quelconque des revendications 1 à 3, caractérisée en ce que les lamelles (9) ont une forme carrée.

6. Collerette selon l'une quelconque des revendications 1 à 3, caractérisée en ce que les lamelles (9) ont une forme trapézoïdale.

7. Collerette selon l'une quelconque des revendications 1 à 3, caractérisée en ce que les lamelles (9) ont une forme triangulaire.

8. Procédé d'obtention d'une collerette (1) pour tuyaux double-parois (10, 12) dans lequel on prévoit une bande métallique sans fin ou tôle (2) d'une dimension déterminée, consistant à:
(a) pratiquer des encoches (3) pas à pas avec un outil approprié et selon une avance ou défilement adapté, pour obtenir des lamelles (9) séparées par des ajours;
(b) plier la tôle (2) près de l'endroit où sont prévues les encoches (3);
(c) rouler ledit ensemble pour obtenir le diamètre désiré;
(d) souder latéralement la structure formée;
(e) conformer avec des molettes le fût obtenu (4) pour obtenir des saillants (6, 7) destinés à l'adaptation ultérieure avec les tuyaux (10, 12).

9. Procédé selon la revendication 8, caractérisé en ce que dans l'étape (b), la tôle (2) est pliée sensiblement à l'équerre.

## Patentansprüche

1. Bund für doppelwandige Rohre mit einem Teil, das einen Stamm (4) ausbildet, der mit einem durchbrochenen, radialen Teil (5) verlängert ist, das nach innen weist,
**dadurch gekennzeichnet,**
daß der radiale Teil (5) aus Lamellen (9) besteht, die durch Durchbrechungen voneinander getrennt sind.

2. Bund nach Anspruch 1,
**dadurch gekennzeichnet,**
daß die durchbrochenen Teile (8) regelmäßig oder unregelmäßig durchbrochen sind.

3. Bund nach einem der Ansprüche 1 oder 2,
**dadurch gekennzeichnet,**
daß derjenige Teil, der den Sramm (4) ausbildet, wenigstens einen nach außen weisenden Vorsprung (6, 7) hat, damit er an wenigstens ein Rohr (10) angepaßt werden kann.

4. Bund nach einem der Ansprüche 1 bis 3,
**dadurch gekennzeichnet,**
daß die Lamellen (9) eine rechteckige Form haben.

5. Bund nach einem der Ansprüche 1 bis 3,
**dadurch gekennzeichnet,**
daß die Lamellen (9) eine quadratische Form haben.

6. Bund nach einem der Ansprüche 1 bis 3,
**dadurch gekennzeichnet,**
daß die Lamellen (9) eine Trapezform haben.

7. Bund nach einem der Ansprüche 1 bis 3,
**dadurch gekennzeichnet,**
daß die Lamellen (9) eine dreieckige Form haben.

8. Verfahren zur Herstellung eines Bundes (1) für doppelwandige Rohre (10, 12), wobei ein endloses Metallband oder Blech (2) mit einer bestimmten Abmessung vorgesehen wird,
**dadurch gekennzeichnet,**
daß
a) Kerben (3) schrittweise mit einem geeigneten Werkzeug und entsprechend einem angepaßten Fortschreiten oder Vorbeiziehen angebracht werden, um Lamellen (9) zu erhalten, die von Durchbrüchen voneinander getrennt sind,
b) das Blech (2) in der Nähe derjenigen Stelle gebogen wird, wo die Kerben (3) vorgesehen sind,
c) diese Baueinheit gerollt wird, um den gewünschten Durchmesser zu erhalten,
d) die geformte Struktur seitlich geschweißt wird,
e) der erhaltene Stamm (4) mit Rändelwerkzeugen verformt wird, um Vorsprünge (6, 7) zu erhalten, die zum endgültigen Anpassen an die Rohre (10, 12) bestimmt sind.

9. Verfahren nach Anspruch 8,
**dadurch gekennzeichnet,**
daß beim Verfahrensschritt b) das Blech (2) im wesentlichen Rechtwinklig gefaltet wird.

## Claims

1. Collar (1) for double-walled pipes including a part forming a shank (4), which part is extended by a cut-out radial part (5) directed towards the interior, characterised in that the radial part (5) is constituted from strips (9) separated by cut-outs.

2. Collar according to Claim 1, characterised in that the perforated parts (8) are uniformly or non-uniformly perforated.

3. Collar according to one of Claims 1 or 2, characterised in that the part forming the shank (4) exhibits at least one projection (6, 7) towards the exterior for its fitting to at least one pipe (10).

4. Collar according to any one of Claims 1 to 3, characterised in that the strips (9) have a rectangular shape.

5. Collar according to any one of Claims 1 to 3, characterised in that the strips (9) have a square shape.

6. Collar according to any one of Claims 1 to 3, characterised in that the strips (9) have a trapezoidal shape.

7. Collar according to any one of Claims 1 to 3, characterised in that the strips (9) have a triangular shape.

8. Process for obtaining a collar (1) for double-walled pipes (10, 12) in which an endless metal band or metal sheet (2) is provided with a predetermined dimension, consisting in:
(a) machining notches (3) step by step with an appropriate tool and with a suitable advance or progression in order to obtain strips ( 9 ) separated by cut-outs;
(b) folding the metal sheet (2) close to the location where the notches (3) are provided;
(c) rolling the said assembly in order to obtain the diameter desired;
(d) laterally welding the structure formed;
(e) shaping the obtained shank (4) with roller wheels in order to obtain projections (6, 7) which are intended for the subsequent fitting with the pipes (10, 12).

9. Process according to Claim 8, characterised in that, in step (b), the metal sheet (2) is folded substantially at right angles.
